# EUROPÄISCHE PATENTSCHRIFT

(11) **EP 1 838 555 B1**
(45) Veröffentlichungstag und Bekanntmachung des Hinweises auf die Patenterteilung: **22.09.2010**
(21) Anmeldenummer: 05823029.3
(22) Anmeldetag: 22.12.2005
(51) Int. Cl.: B60R 13/08, G10K 11/16

(54) **STRUKTURBAUTEIL, INSBESONDERE ABSCHIRMTEIL**
STRUCTURAL COMPONENT, IN PARTICULAR A SHIELD
ELEMENT CONSTITUTIF STRUCTURAL, NOTAMMENT ELEMENT DE PROTECTION

(30) Priorität: 21.01.2005 DE 102005003126
(43) Veröffentlichungstag der Anmeldung: 03.10.2007
(73) Patentinhaber: ElringKlinger AG, 72581 Dettingen/Erms (DE)
(72) Erfinder: SCHULZ, Wolfgang, 90579 Langenzenn (DE)
(74) Vertreter: Bartels, Martin Erich Arthur
(86) Internationale Anmeldenummer: PCT/EP2005/013881
(87) Internationale Veröffentlichungsnummer: WO 2006/076963

(56) Entgegenhaltungen:
- PATENT ABSTRACTS OF JAPAN Bd. 1999, Nr. 01, 29. Januar 1999 (1999-01-29) & JP 10 274115 A (TOYODA GOSEI CO LTD; TOYOTA MOTOR CORP), 13. Oktober 1998 (1998-10-13)
- PATENT ABSTRACTS OF JAPAN Bd. 2003, Nr. 06, 3. Juni 2003 (2003-06-03) & JP 2003 035137 A (AICHI MACH IND CO LTD), 7. Februar 2003 (2003-02-07)
- PATENT ABSTRACTS OF JAPAN Bd. 2003, Nr. 05, 12. Mai 2003 (2003-05-12) & JP 2003 027936 A (HONDA MOTOR CO LTD), 29. Januar 2003 (2003-01-29)
- PATENT ABSTRACTS OF JAPAN Bd. 1997, Nr. 11, 28. November 1997 (1997-11-28) & JP 09 177564 A (NISSAN MOTOR CO LTD), 8. Juli 1997 (1997-07-08)
- PATENT ABSTRACTS OF JAPAN Bd. 2002, Nr. 02, 2. April 2002 (2002-04-02) & JP 2001 303951 A (SUZUKI MOTOR CORP), 31. Oktober 2001 (2001-10-31)
- PATENT ABSTRACTS OF JAPAN Bd. 1998, Nr. 14, 31. Dezember 1998 (1998-12-31) & JP 10 252458 A (YUTAKA GIKEN CO LTD), 22. September 1998 (1998-09-22)

## Beschreibung

Die Erfindung betrifft ein Strukturbauteil, insbesondere Abschirmteil gemäß der Merkmalsausgestaltung des Oberbegriffes des Patentanspruches 1.

Während die Wärmeentwicklung beispielsweise eines sparsamen leistungsoptimierten Dieselmotors am Zylinderkurbelwellengehäuse sehr gering sein kann, gilt das für "heiße Zonen", wie bei Krümmern Turboladern, Katalysatoren etc. keineswegs. Durch die immer kompaktere Konstruktion der Motoren geraten zunehmend Komponenten in enge Nachbarschaft, die thermisch nicht "kompatibel" sind. Demgemäß ist es notwendig, mit sog. Abschirmteilen, wie Hitzeschildern, thermische Motorenkomponenten gegenüber angrenzenden wärmeempfindlicheOn Aggregaten, wie Sensoren, Kraftstoffleitungen, Druckdosen, Karosserieteilen etc., zu schützen. Die Situation wird durch den Kompaktbau auch insofern verschärft, dass die hohe Pakkungsdichte der Aggregate den kühlenden Luftstrom im Motorraum einengt. Auch Lärmschutzmaßnahmen können dazu mit beitragen. So können beispielsweise Kunststoffbodenplatten, die den Schallaustritt vom Motorraum zur Fahrbahn vermindern sollen, unter Umständen eine wirkungsvolle Isolation erzeugen; mit der Wärme im Motorraum eingeschlossen wird. Katalysatoren zählen wegen ihrer phasenweisen hohen Oberflächentemperatur zu den Hitzequellen, die den Einsatz von schützenden Schildbarrieren jedenfalls erforderlich machen können. Ein typisches Beispiel hierfür sind konstruktive Maßnahmen, wie die Positionierung des Katalysators dicht am Krümmer des Gesamtabgassystems. Dieses Bauprinzip, das der schnellen Aufheizung des Katalysators und damit der Emissionsminderung in der Kaltstartphase dient, verlegt eine starke Hitzequelle in den Motorraum, wo sich zahlreiche Aggregate auf engem Raum drängen. Ebenfalls eine Ursache für die wachsende Bedeutung von Abschirmteilen, wie Hitzeschildern, ist der Trend zum Einsatz von Thermoplasten. Die hervorragend formbaren, leichten und wirtschaftlichen Werkstoffe setzen sich im Motorraum zusehends durch, erfordern aber ein besonderes Augenmerk im Hinblick auf die Umgebungstemperaturen am Einsatzort, bezogen auf sonstige thermische Motorenteile (Neue Werkstoffe und Entwicklungs-Tools für den Hitzeschutz in MTZ 12/2001, Jahrgang 62, Seite 1044ff).

Durch die DE 102 47 641 B3 ist ein Strukturbauteil bekannt, insbesondere in Form eines schalldämpfenden Abschirmteils als Bauteil eines Kraftfahrzeuges. Um bei dem bekannten Strukturbauteil die Schalldämmung zu verbessern, besteht das dahingehende Abschirmteil aus einem Schirmkörper mit einem Basisrand als Strukturteil einer ersten Art, das randseitig über winkelförmige Bügelschenkel innerhalb des Motorraumes an dortigen feststehenden Teile festlegbar ist und thermische Motorenkomponenten gegenüber wärmeempfindlichen Baukomponenten abschirmt.

Der Schirmkörper als Strukturteil der ersten Art ist in einem Mittenbereich U-förmig gewölbt und ist im übrigen dahingehend symmetrisch aufgebaut. Der U-förmig gewölbte Mittenbereich geht randseitig in Randbereiche stärkerer Krümmung über, wobei an den beiden einander gegenüberliegenden Randbereichen die winkelförmigen Bügel als Festlegemittel nachträglich angebracht sind. Der Schirmkörper besteht aus zwei Metallblechlagen, zwischen denen sich eine schalldämmende und/oder wärmedämmende Dämmschicht erstreckt und zum Festlegen der Blechdecklagen aneinander dient eine Bördelung, bei der der freie Bördelrand der einen Decklage den Randbereich der anderen Decklage flächig umfaßt. Um Gewicht zu sparen, ist der Schirmkörper aus Aluminium oder aus einem sonstigen Leichtmetall aufgebaut.

Die bekannte Lösung dient vorzugsweise der Abschirmung einer Kupplung zwischen einem Getriebeflansch und einer Kardanwelle vor vom Getriebe kommenden Körperschall sowie einer dauerhaften Beeinflussung durch Temperaturstrahlung eines benachbart verlaufenden Abgasrohres. Bei Versuchen wurde eine Verringerung der Schallemission bei der bekannten Lösung um 3 dB erreicht. Um die dahingehende Abschirmwirkung zu erreichen, erstrecken sich längs des Mittenbereiches des ersten Strukturteils in Form des Schirmkörpers weitere Strukturteile einer zweiten Art, die sich in Form von sickenförmigen Längs- und Querrippen über die konvexe Außenseite des Schirmkörpers erstrecken. Charakteristisch an dieser bekannten Strukturierung ist, dass sich an Längsrippen, die sich über die gesamte Länge des Schirmkörpers erstrecken, einstückig angeformte Querrippen anschließen, die eine Art Noppenstruktur ausbilden und die in alternierender Reihenfolge benachbart in Zwischenabstände zwischen zwei jeweiligen Querrippen einer benachbarten Längsrippe eingreifen. Die nach außen hin stärker abgekrümmten Randbereiche mit den Anschlußbügeln sind hingegen von den genannten Rippen freigehalten. Im Hinblick auf die unterbrochene Querrippenstruktur der bekannten Lösung steht zu erwarten, dass insoweit die Steifigkeit und Festigkeit reduziert ist. Ferner ist an der Übergangsstelle zu den Anschlußbügeln eine Aussteifung des Schirmkörpers nur über die abgewinkelten Bügelschenkel erhalten, die insoweit die Anschlußgeometrie, hier des Strukturbauteils an feststehenden Motor- oder Chassiskomponenten, weitgehend definieren, was dergestalt die Einsatzmöglichkeiten des bekannten Strukturbauteils einschränkt. Auch benötigen die Anschlußbügel mit ihren abgewinkelten Bügelschenkeln sowie den Augenanschlußstellen für den Durchgriff eines Befestigungsmittels (Schraube) zum einen Bauraum und zum anderen erhöhen sie das Gewicht für die bekannte Lösung. Auch ist die bekannte Lösung nicht dazu geeignet, größere Bereiche im Motorenraum thermisch zu isolieren.

Durch Patent Abstracts of Japan Band 1999, Nr. 01, 29. Januar 1999 (1999-01-29) &; JP 10 274115 A (TOYODA GOSEI CO LTD; TOYOTA MOTOR CORP), 13. Oktober 1998 (1998-10-13) ist ein gattungsgemäßes Strukturbauteil in Form eines Abschirmteils bekannt, mit von ihrer Flächenausdehnung und/oder ihrem Richtungsverlauf zumindest teilweise unterschiedlich ausgebildeten Strukturteilen, von denen mindestens ein Strukturteil einer ersten Art mit einer Krümmung versehen ist und mit Strukturteilen einer zweiten Art, wobei die Strukturteile der zweiten Art aus dem Strukturteil der ersten Art derart gebildet sind, dass in mindestens zwei Richtungen gekrümmte hohlprofilartige Aufnahmekanäle in das Strukturteil der ersten Art eingeformt sind und wobei die jeweiligen Aufnahmekanäle in der einen Krümmungsrichtung der Krümmung des Strukturteils der ersten Art nachfolgen. Durch die bekannte Lösung ist ferner aufgezeigt, dass die einzelnen Aufnahmekanäle voneinander beabstandet, sich auf der Oberseite des Strukturteiles der ersten Art erstrecken, das dergestalt unter Einhalten eines vorgebbaren Abstandes zumindest teilweise die Abgassektion eines Motors übergreift, wobei gekrümmte Abgasleitungen zumindest teilweise in den zuordenbaren Aufnahmekanälen verlaufen. Dabei ist das Strukturteil der ersten Art randseitig von jeweils einem Strukturteil der zweiten Art begrenzt.

Mit der bekannten Lösung ist es möglich, thermische Komponenten, wie beispielsweise die gekrümmten Abgasleitungen eines Abgassystems, in integrierender Weise aufzunehmen, so dass durch die dahingehende Aufnahme es nicht nur zu einer wirksamen thermischen Abschirmung sowie von auftretenden Geräuschemissionen in Form von Körper- oder Luftschall kommt, sondern dass auch Bauraum eingespart ist, was in der Kraftfahrzeugtechnik grundsätzlich eine Rolle spielt. Die Anwendung der bekannten Lösung ist für Abgaskrümmersysteme aufgezeigt, so dass die räumliche Ausdehnung des Abschirmteils relativ klein ausfällt, und was die Vermeidung übermässiger Eigenschwingungen anbelangt, läßt die bekannte Lösung noch Wünsche offen.

Ausgehend von diesem Stand der Technik stellt sich daher die Erfindung die Aufgabe, ein Strukturbauteil der genannten Art unter Beibehalten seiner Vorteile, nämlich eine sehr gute Schall- und Wärmeisolation sicherzustellen, dahingehend weiter zu verbessern, dass wenig Einbauraum benötigt wird, dass es universell einsetzbar ist bei gleichzeitig erhöhter Steifigkeit sowie Festigkeit und reduziertem Gewicht mit vergleichbar anzusetzenden Herstellkosten und insbesondere auch dazu geeignet ist, größere Bereiche schwingungsarm innerhalb eines Motorenraumes thermisch zu isolieren. Eine dahingehende Aufgabe löst ein Strukturbauteil mit den Merkmalen des Patentanspruches 1 in seiner Gesamtheit.

Dadurch, dass gemäß dem kennzeichnenden Teil des Patentanspruches 1 das Strukturteil der ersten Art in ein manschettenartiges Strukturteil der dritten Art übergeht, das in Richtung des Strukturteils des ersten Art über einen vorgebbaren Flächenbereich im wesentlichen frei von Versteifungselementen gehalten ist und dass sich an diesen Flächenbereich ein weiterer Flächenbereich mit Versteifungselementen als Strukturteil der vierten Art anschließt, lassen sich neben der Abschirmung thermischer Komponenten, wie beispielsweise die gekrümmten Abgasleitungen eines Abgassystems, weitere wärmekritische Motorenkomponenten, wie ein Katalysator, gegenüber der Umgebung entsprechend abschirmen und mit dem Gesamtstrukturbauteil mit seinen vorzugsweise einstückig miteinander verbundenen Einzelstrukturteilen ist dergestalt ein sehr großer Bereich am Motor thermisch isoliert, ohne dass es zu übermässigen Eigenschwingungen mit der schädlichen Beeinflussung der Dauerhaltbarkeit kommen kann. Durch die Unterbrechung der einstückig miteinander verbundenen Strukturteile über ein Strukturteil, das über einen vorgebbaren Flächenbereich freigehalten ist von Versteifungselementen, kommt es zu Steifigkeitsprüngen in den jeweiligen Absätzen und den versetzten Ebenen des Strukturbauteils mit der Folge, dass etwaig auftretende Schwingungen sich durch das Bauteil nicht ungestört ausbreiten können. Hierdurch ist ein zusätzlicher Dämpfungseffekt bei den auftretenden Schwingungen erreicht, was die Geräuschemissionen niedrig hält und so keine Entsprechung im Stand der Technik hat.

Die von ihrer Außen- oder Oberseite her gesehen konvexen Aufnahmekanäle sind in der Art von sickenförmigen Versteifungsrippen vergrößerten Querschnitts ausgebildet und folgen dem Krümmungsverlauf des ersten Strukturteils mit seiner flächigen Ausdehnung nach. Dergestalt erfolgt auch im Bereich der Krümmungsänderung zum Randbereich hin eine Versteifung der Gesamtrandstruktur des derart erzeugten Schirmkörpers, der insoweit in der Art einer Flachwanne ausbildbar in Verbindung mit der integrativen Aufnahme von Teilen des Abgassystems Einbauraum einsparen hilft und im übrigen wenig Gewicht benötigt.

Eine Befestigung des Strukturbauteils an den sonstigen Motorenkomponenten kann über an sich bekannte Festlegeklammern kostengünstig erfolgen und ferner können auch Schraubverbindungen mit Dämpferelementen zum Einsatz kommen. Mittels der verschiedenen Strukturteile läßt sich das Gesamtstrukturbauteil dergestalt aussteifen, dass eine Art Schirmpanzer realisiert ist, dessen Eigenschwingungsverhalten man als unkritisch bezeichnen kann, so dass die erfindungsgemäße Strukturbauteillösung insbesondere dort sinnvoll ihren Einsatz findet, wo im Betrieb mit einem hohen Aufkommen an Vibrationen zu rechnen ist. Neben den genannten Vorteilen bedingt die derart ausgesteifte Grundstruktur eine deutliche Reduzierung der Schallausbreitung lärmender Motorenkomponenten.

Um die thermische Belastung des Strukturbauteils niedrig zu halten, ist vorzugsweise vorgesehen, dass die einzelnen Aufnahmekanäle voneinander beabstandet sich auf der Oberseite des Strukturbauteils der ersten Art erstrecken, das dergestalt unter Einhaltung eines vorgebbaren Abstandes die jeweilige Abgassektion des Motors übergreift. Die zwischen Innenseite des jeweiligen Aufnahmekanals und Außenseite der Abgasleitungen der Abgassektion befindliche Kraft reduziert auch die Ausbreitung von unerwünschten Schallemissionen.

Weitere vorteilhafte Ausführungsformen des erfindungsgemäßen Strukturbauteils sind Gegenstand der sonstigen Unteransprüche.

Im folgenden wird das erfindungsgemäße Strukturbauteil anhand eines Ausführungsbeispiels nach der Zeichnung näher erläutert. Dabei zeigen in prinzipieller und nicht maßstäblicher Darstellung die
- Fig. 1: in perspektivischer Ansicht eine Seitendarstellung auf das Strukturbauteil im Einbauzustand;
- Fig.2: eine Unteransicht auf das Strukturbauteil im Einbauzustand mit vorgelagerter Abgassektion und Katalysator.

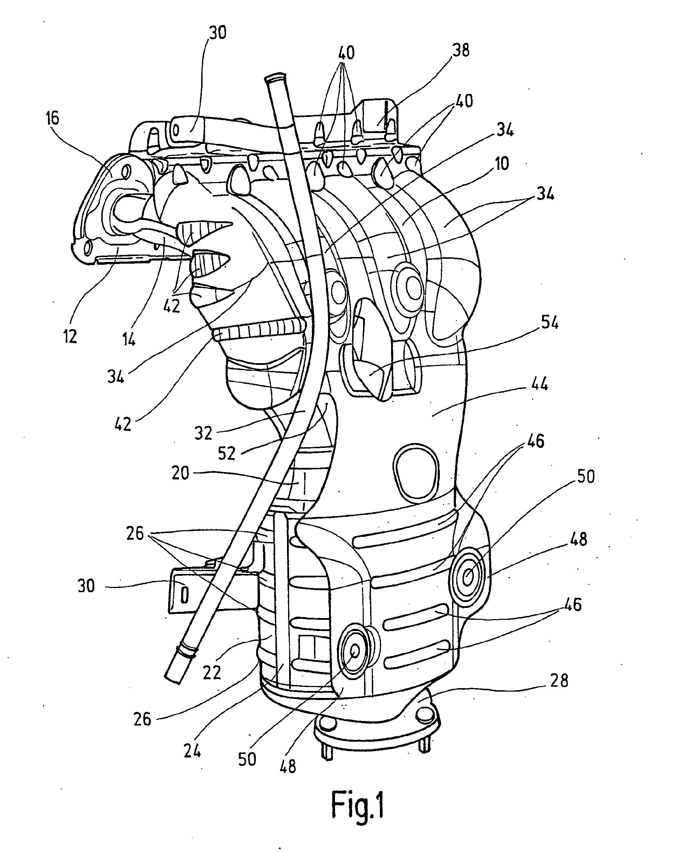

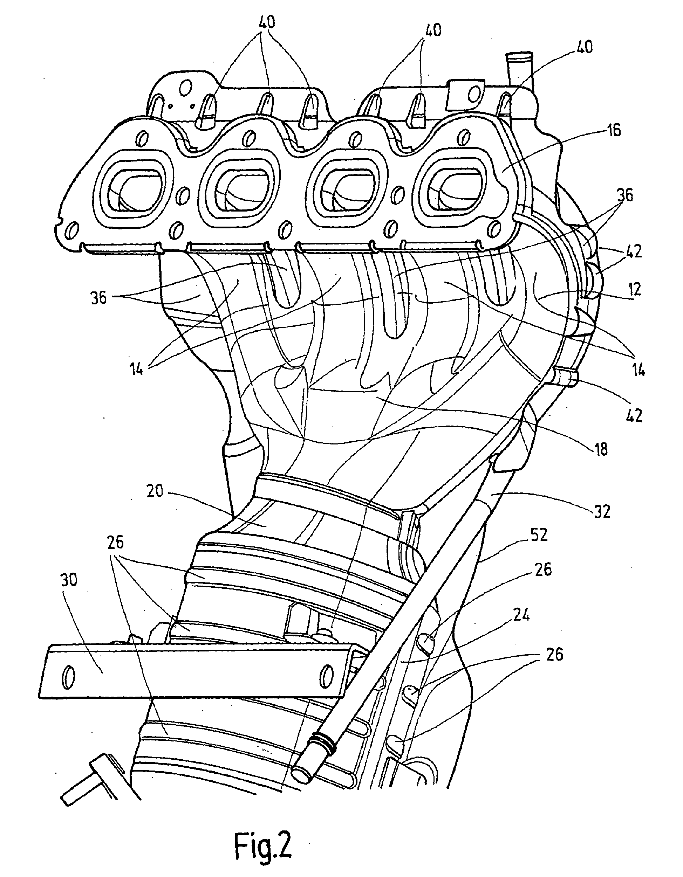

Die Fig. 1 und 2 zeigen das erfindungsgemäße Strukturbauteil als Ganzes, das insbesondere in der Form eines Abschirmteils ausgebildet ist und dazu dienen soll, größere Bereiche im Inneren des Motorenraumes thermisch zu isolieren und Geräuschemissionen in Form von Körper- und Luftschall zu reduzieren. Das Strukturbauteil weist von ihrer Flächenausdehnung und/oder ihrem Richtungsverlauf her unterschiedlich ausgebildete Strukturteile auf, von denen mindestens ein Strukturteil einer ersten Art 10 mit einer Krümmung versehen ist, die dem gekrümmten Verlauf einer Abgassektion 12 mit ihren einzelnen Abgasleitungen 14 (insgesamt vier Stück) nachfolgt. Die dahingehenden Abgasleitungen 14 münden mit ihrer Oberseite in ein gemeinsames Anschlußflanschstück 16 ein, mit dem die Abgassektion 12 an einen üblichen Vierzylinder-Kraftfahrzeugmotor anschließbar ist. An ihrem anderen gegenüberliegenden Ende münden die fingerartigen Abgasleitungen 14 in ein gemeinsames handtellerartiges Verbindungsstück 18, das wiederum über ein konisch sich erweiterndes Verbreiterungsstück 20 in einen Katalysator 22 mit einer zylindrischen Außenumfangswand übergeht, die aus Blechteilen bestehend mit Längsrippen 24 und Querrippen 26 versehen ist. In Blickrichtung auf die Fig. 1 gesehen, ist der Katalysator 22 an seiner Unterseite mit einem Anschlußflansch 28 versehen, an das ein übliches fahrzeugspezifisches Auspuffsystem anschließbar ist. Über Halterungen 30 getragen, erstreckt sich des weiteren längs des Strukturbauteils ein röhrenförmiger Anschlußkörper 32 für die Aufnahme eines üblichen, nicht näher dargestellten Ölmeßstabes. Auf der Oberseite des Strukturteils erster Art 10 sind vier Strukturteile 34 einer zweiten Art angeordnet, wobei die dahingehenden Strukturteile der zweiten Art 34 aus dem Strukturteil der ersten Art 10 gebildet sind, indem im Querschnitt und von innen gesehen konkave Aufnahmekanäle 36 (vgl. Fig.2) in das Strukturteil der ersten Art 10 eingeformt sind.

Die Strukturteile der ersten und zweiten Art 10,34 münden in Blickrichtung auf die Figuren gesehen an ihrer Oberseite in ein winkelförmiges Anschlußstück 38, das dem Festlegen des gesamten Strukturbauteils im Bereich seines oberen Endes an nicht näher dargestellten Motoren- oder sonstigen Fahrzeugkomponenten dient. Zur Aussteifung in diesem Bereich sind nasen- oder noppenartige Versteifungselemente 40 vorgesehen, die insbesondere am Übergang des Anschlußstückes 38 zu den Strukturteilen der zweiten Art 34 diese im wesentlichen randseitig begrenzen und dergestalt aussteifen. Des weiteren weist zumindest ein außenliegendes Strukturteil der zweiten Art 34 querverlaufende Versteifungsrippen 42 im Randbereich des Strukturteils der ersten Art 10 auf, in die beim Formen des Strukturbauteils als Ganzes die für die eigentlichen Strukturen nicht benötigen Materialmengen eingebracht werden, so dass sich ansonsten ein im wesentlichen glatter Formteilverlauf ergibt. Die Strukturteile der zweiten Art 34 übergreifen finger- oder handschuhartig die einzelnen Abgasleitungen 14 und die derart gebildeten Aufnahmekanäle 36 halten einen vorgebbaren Abstand zu der Oberseite der Abgasleitungen 14 ein. Dennoch sind die einzelnen Abgasleitungen 14 mit ihrer gekrümmten Oberseite entlang der Innenseite der Aufnahmekanäle 36 geführt und derart in abschirmender Weise zumindest teilweise gekapselt. Insbesondere die beiden äußeren Strukturteile der zweiten Art 34 sind mit ihren freien randseitigen Begrenzungen verlängert und umfassen dergestalt schalenartig die beiden äußeren Randzonen der Abgassektion 12 mit ihren Abgasleitungen 14 (vgl. Fig.2).

Wie insbesondere die Fig.1 des weiteren zeigt, geht das flächige Strukturteil der ersten Art 10 in ein manschettenartiges Strukturteil der dritten Art 44 über, das in Richtung des Strukturteils der ersten Art 10 über einen vorgebbaren Flächenbereich im wesentlichen frei von Versteifungselementen gehalten ist, wobei sich an diesen freigehaltenen Flächenbereich ein weiterer Flächenbereich mit Versteifungselementen 44 als Strukturteile der vierten Art anschließt. Die Versteifungselemente 46 sind in der Art von vorstehenden Querrippen ausgebildet und in das Strukturteil der dritten Art 44 eingeformt, wobei diese mit vorgebbaren Abständen zueinander im wesentlichen quer zu den Aufnahmekanälen 36 verlaufen und im übrigen parallel zu den Querrippen 26 des Umfassungsmantels für den Katalysator 22.

Demgemäß kann man eine Einteilung des erfindungsgemäßen Strukturbauteils dergestalt vornehmen, dass das Strukturbauteil der ersten Art 10 mit den Aufnahmekanälen 36 dem Krümmungsbereich der Abgasleitungen 14 der Abgassektion 12 nachfolgt und das Strukturbauteil der dritten Art als weiteres schalenförmiges (manschettenartiges) Bauteil das Verbreiterungsstück 20 sowie den Katalysator 22 teilweise übergreift. Ferner sind die Strukturbauteile der zweiten und vierten Art 34 bzw. 46 in den endseitigen Abschlußbereichen des Strukturbauteils angeordnet und der dazwischen liegende mittlere Bereich ist von Versteifungselementen freigehalten. Des weiteren erstrecken sich die jeweiligen Versteifungselemente 46 zwischen zwei Formflächen 48 als Strukturteile der fünften Art, die in Richtung der Oberseite des Strukturbauteils vorstehen ebenso wie die einzelnen Versteifungselemente 46. Neben einer zusätzlichen randseitigen Aussteifung erlauben die Formflächen 48 das Einbringen von Befestigungselementen 50 zum Festlegen des Strukturbauteils an vorgebbaren Motorenkomponenten, hier in Form des Katalysators 22. Des weiteren hat es sich für eine gute Aussteifung als günstig erwiesen, zumindest an der jeweils randseitigen Übergangsstelle 52 von dem Strukturteil der ersten und zweiten Art 10,34 zumindest das Strukturteil der dritten Art 44 mit einer Taillierung, wie dargestellt, zu versehen. Des weiteren befindet sich in einer muldenartigen Vertiefung zwischen zwei benachbarten Strukturteilen der zweiten Art 34 an der Stelle des Überganges zum Strukturteil der dritten Art 44 eine Ausnehmung 54, die für den Durchgriff einer Lambda-Sonde vorgesehen ist.

Aufgrund der speziellen Struktur des Gesamtbauteils kommt es in den jeweiligen Absätzen sowie in den versetzten Ebenen zu "Steifigkeitssprüngen", so dass sich etwaig auftretende Schwingungen durch das Bauteil nicht ungestört ausbreiten können. Hierdurch kommt es zu, einer zusätzlichen Dämpfung der Schwingungen und im übrigen ist eine deutlich erhöhte Dauerhaltbarkeit des Gesamtsystems erreicht. Das Strukturbauteil ist vorzugsweise aus einem üblichen Stahl- oder Blechwerkstoff gefertigt und kann auch aus Edelstahlmaterial bestehen. Das Strukturbauteil kann ein- oder mehrlagig ausgebildet sein und bei einem mehrlagigen Aufbau befindet sich vorzugsweise zwischen zwei Decklagen (nicht dargestellt) eine isolierende Zwischenschicht üblicher Art.

## Patentansprüche

1. Strukturbauteil, insbesondere Abschirmteil, mit von ihrer Flächenausdehnung und/oder ihrem Richtungsverlauf zumindest teilweise unterschiedlich ausgebildeten Strukturteilen, von denen mindestens ein Strukturteil einer ersten Art (10) mit einer Krümmung versehen ist und mit Strukturteilen einer zweiten Art (34), wobei die Strukturteile der zweiten Art (34) aus dem Strukturteil der ersten Art (16) derart gebildet sind, dass in mindestens zwei Richtungen gekrümmte hohlprofilartige Aufnahmekanäle (36) in das Strukturteil der ersten Art (10) eingeformt sind und wobei die jeweiligen Aufnahmekanäle (36) in der einen Krümmungsrichtung der Krümmung des Strukturteils der ersten Art (10) nachfolgen, **dadurch gekennzeichnet, dass** das Strukturteil der ersten Art (10) in ein manschettenartiges Strukturteil der dritten Art (44) übergeht, das in Richtung des Strukturteils der ersten Art (10) über einen vorgebbaren Flächenbereich im wesentlichen frei von Versteifungselementen gehalten ist und dass sich an diesen Flächenbereich ein weiterer Flächenbereich mit Versteifungselementen (46) als Strukturteil der vierten Art anschließt.

2. Strukturbauteil nach Anspruch 1, **dadurch gekennzeichnet, dass** die einzelnen Aufnahmekanäle (36) voneinander beabstandet, sich auf der Oberseite des Strukturteils der ersten Art (10) erstrecken, das dergestalt unter Einhalten eines vorgebbaren Abstandes zumindest teilweise die Abgassektion (12) eines Motors übergreift, und dass gekrümmte Abgasleitungen (34) zumindest teilweise in den jeweils zuordenbaren Aufnahmekanälen (36) verlaufen.

3. Strukturbauteil nach Anspruch 1 oder 2, **dadurch gekennzeichnet, dass** das Strukturteil der ersten Art (10) randseitig von jeweils einem Strukturteil der zweiten Art (34) begrenzt ist.

4. Strukturbauteil nach einem der Ansprüche 1 bis 3, **dadurch gekennzeichnet, dass** die Versteifungselemente (46) in der Art von Querrippen ausgebildet sind, die mit vorgebbaren Abständen zueinander im wesentlichen quer zu den Aufnahmekanälen (36) verlaufen.

5. Strukturbauteil nach einem der Ansprüche 1 bis 4, **dadurch gekennzeichnet, dass** das manschettenartige Strukturtei I der dritten Art (44) einen Katalysator (22), vorzugsweise unter Einhalten eines Abstandes, übergreift, der sich an die Abgassektion (12) anschließt.

6. Strukturbauteil nach einem der Ansprüche 1 bis 5, **dadurch gekennzeichnet, dass** die jeweiligen Versteifungselemente (46) als Strukturteil der vierten Art sich zwischen zwei Formflächen (48) erstrecken als Strukturteil der fünften Art, die in Richtung der Oberseite des Strukturbauteils vorstehen, ebenso wie die einzelnen Versteifungselemente (46).

7. Strukturbauteil nach Anspruch 6, **dadurch gekennzeichnet, dass** die jeweilige Formfläche (48) von mindestens einem Befestigungselement (50) durchgriffen ist zum Festlegen des Strukturbauteils an vorgebbaren Baukomponenten, wie Motoren- und/oder sonstigen Fahrzeugkomponenten.

8. Strukturbauteil nach einem der Ansprüche 1 bis 7, **dadurch gekennzeichnet, dass** zumindest an der jeweils randseitigen Übergangsstelle (52) von dem Strukturteil der ersten und zweiten Art (10,34) zumindest das Strukturteil der dritten Art (44) mit einer Taillierung versehen ist.

9. Strukturbauteil nach einem der Ansprüche 1 bis 8, **dadurch gekennzeichnet, dass** zwischen zwei benachbarten Strukturteilen der zweiten Art (34) an der Stelle des Überganges zum Strukturteil der dritten Art (44) eine Ausnehmung (54) für den Durchgriff einer Lambda-Sonde vorgesehen ist.

## Claims

1. A structural component, in particular a shielding part, having structural parts formed at least partially differently as regards their extension and/or their orientation, of which at least one structural part of a first type (10) is provided with a curve, and having structural parts of a second type (34), the structural parts of the second type (34) being formed from the structural part of the first type (16) such that hollow profile-type receiving channels (36) curved in at least two directions are moulded into the structural part of the first type (10), and the respective receiving channels (36) following in the one curvature direction of the curve of the structural part of the first type (10), **characterised in that** the structural part of the first type (10) passes over into a sleeve-type structural part of the third type (44) which is held, essentially free from any reinforcement elements, in the direction of the structural part of the first type (10) by means of a pre-specifiable surface region, and that a further surface region with reinforcement elements (46) is attached to this surface region as a structural part of the fourth type.

2. The structural component according to Claim 1, **characterised in that** the individual receiving channels (36) extend, spaced apart from one another, on the upper side of the structural part of the first type (10) that thus at least partially overlaps the exhaust section (12) of an engine while maintaining a pre-specifiable distance, and that curved exhaust lines (34) extend at least partially in the respectively assignable receiving channels (36).

3. The structural component according to Claim 1 or 2, **characterised in that** the structural part of the first type (10) is respectively defined on the edge side by a structural part of the second type (34).

4. The structural component according to any of Claims 1 to 3, **characterised in that** the reinforcement elements (46) are formed in the manner of lateral ribs which extend pre-specifiable distances apart from one another substantially laterally to the receiving channels (36).

5. The structural component according to any of Claims 1 to 4, **characterised in that** the sleeve-type structural part of the third type (44) overlaps a catalyser (22), preferably maintaining a distance, which adjoins the exhaust section (12).

6. The structural component according to any of Claims 1 to 5, **characterised in that** the respective reinforcement elements (46) as a structural part of the fourth type extend between two mould surfaces (48) as a structural part of the fifth type which project towards the upper side of the structural component, as do the individual reinforcement elements (46).

7. The structural component according to Claim 6, **characterised in that** the respective mould surface (48) is passed through by at least one attachment element (50) for securing the structural component to pre-specifiable components, such as engine and/or other vehicle components.

8. The structural component according to any of Claims 1 to 7, **characterised in that** at least on the respective edge-side crossover point (52) of the structural part of the first and second type (10, 34) at least the structural part of the third type (44) is provided with a narrowing.

9. The structural component according to any of Claims 1 to 8, **characterised in that** between two adjacent structural parts of the second type (34) at the point of the crossover to the structural part of third type (44) a recess (54) is provided through which a lambda sensor can pass.

## Revendications

1. Elément de structure, notamment élément de protection comprenant des parties de structure, constituées, au moins partiellement, d'une manière différente par leur étendue en surface et/ou par leur tracé en direction, dont au moins une partie d'une structure est pourvue d'un premier type (10) ayant une courbure et comprenant des parties de structure d'un deuxième type (34), les parties de structure du deuxième type (34) étant formées à partir de la partie de structure du premier type (16) de manière à former dans la partie de structure du premier type (10) des canaux (36) de réception de type à profilé creux courbés dans au moins deux directions et dans lequel les canaux (36) de réception respectifs suivent, dans l'une des directions de courbure, la courbure de la partie de structure du premier type (10), **caractérisé en ce que** la partie de structure du premier type (10) se transforme en une partie de structure de type en manchette du troisième type (44), qui est maintenue dans la direction de la partie de structure du premier type (10) par une zone de surface pouvant être prescrite sensiblement sans élément de rigidification et **en ce qu'**à cette zone de surface se raccorde comme la partie de structure du quatrième type, une autre zone de surface ayant des éléments (46) de rigidification.

2. Elément de structure suivant la revendication 1, **caractérisé en ce que** les divers canaux (36) de réception sont à distance les uns des autres, s'étendent sur le côté supérieur de la partie de structure du premier type (10) en empiétant au moins en partie sur la section (12) des gaz d'échappement d'un moteur, tout en maintenant une distance pouvant être prescrite et **en ce que** des conduits (34) courbés d'échappement des gaz s'étendent au moins en partie dans les canaux (36) de réception pouvant être respectivement associés.

3. Elément de structure suivant la revendication 1 ou 2, **caractérisé en ce que** la partie de structure du premier type (10) est délimitée du côté du bord par respectivement une partie de structure du deuxième type (34).

4. Elément de structure suivant l'une des revendications 1 à 3, **caractérisé en ce que** les éléments (46) de rigidification sont constitués sous la forme de nervures transversales qui s'étendent à des distances pouvant être prescrites entre elles sensiblement transversalement aux canaux (36) de réception.

5. Elément de structure suivant l'une des revendications 1 à 4, **caractérisé en ce que** la partie de structure du type à manchette du troisième type (44) empiète sur un pot catalytique (22), de préférence avec maintien d'une certaine distance, qui se raccorde à la section (12) des gaz d'échappement.

6. Elément de structure suivant l'une des revendications 1 à 5, **caractérisé en ce que** les éléments (46) respectifs de rigidification, en tant que partie de structure du quatrième type, s'étendent entre deux surfaces (48) de forme en tant que partie de structure préformée, qui font saillie en direction du côté supérieur de l'élément de structure tout comme les divers éléments (46) de rigidification.

7. Elément de structure suivant la revendication 6, **caractérisé en ce que** la surface (48) de forme respective est
traversée par au moins un élément (50) de fixation, pour la fixation de l'élément de structure à des composants pouvant être prescrits, comme des composants de moteur et/ou d'autres composants de véhicule.

8. Elément de structure suivant l'une des revendications 1 à 7, **caractérisé en ce qu'**au moins au point (52) de transition du côté du bord de la partie de structure du premier et du deuxième type (10, 34) au moins la partie de structure du troisième type (44) est munie d'une adaptation.

9. Elément de structure suivant l'une des revendications 1 à 8, **caractérisé en ce qu'**un évidemment (54) pour le passage d'une sonde lambda est prévue entre deux parties de structure voisines du deuxième type (34) au point de transition vers la partie de structure du troisième type (44).
